# EUROPÄISCHE PATENTSCHRIFT

(11) **EP 3 532 340 B1**
(45) Veröffentlichungstag und Bekanntmachung des Hinweises auf die Patenterteilung: **13.05.2020**
(21) Anmeldenummer: 18742813.1
(22) Anmeldetag: 25.07.2018
(51) Int. Cl.: B60L 50/50

(54) **ENERGIEVERWALTUNGSSYSTEM FÜR EIN KRAFTFAHRZEUG**
ENERGY MANAGEMENT SYSTEM FOR A VEHICLE
SYSTÈME DE GESTION D'ÉNERGIE POUR UN VÉHICULE

(30) Priorität: 26.07.2017 EP 17183263
(43) Veröffentlichungstag der Anmeldung: 04.09.2019
(73) Patentinhaber: Sono Motors GmbH, 80935 München (DE)
(72) Erfinder: CHRISTIANS, Jona, 80809 München (DE); HAHN, Laurin, 81373 München (DE)
(74) Vertreter: Qip Patentanwälte Dr. Kuehn & Partner mbB
(86) Internationale Anmeldenummer: PCT/EP2018/070239
(87) Internationale Veröffentlichungsnummer: WO 2019/020723

(56) Entgegenhaltungen:
- WO-A1-2014/199207
- DE-A1-102008 043 205
- DE-A1-102014 207 033
- GB-A- 2 499 446
- US-A1- 2010 193 261

## Beschreibung

Die Erfindung betrifft ein Energieverwaltungssystem für ein Kraftfahrzeug.

Eine große Herausforderung bei der Etablierung von elektrisch angetriebenen Kraftfahrzeugen ist deren Energieversorgung. Deswegen kann es vorgesehen werden, ein Kraftfahrzeug mit wenigstens einer Solarzelle auszurüsten, welche mittels Lichteinstrahlung dazu angeregt werden kann, elektrische Energie zu erzeugen und damit einen Energiespeicher des Kraftfahrzeugs zu laden. Dabei ist jedoch eine Benutzung des Kraftfahrzeugs nur bedingt auf die Sonneneinstrahlung zeitlich abstimmbar. Beispielsweise kann es vorkommen, dass ein Kraftfahrzeug tagsüber bei starker Sonneneinstrahlung nicht genutzt wird, wodurch dann von jeweiligen Solarzellen gegebenenfalls mehr Strom erzeugt wird, als von dem Energiespeicher des Kraftfahrzeugs aufgenommen werden kann. Dadurch wird diese potenziell erzeugbare Energie nicht genutzt. Diese überschüssige elektrische Energie könnte das Kraftfahrzeug deswegen anderen Verbrauchern zur Verfügung stellen. Umgekehrt kann es bei einer Benutzung bei geringer Sonneneinstrahlung, wie beispielsweise nachts oder bei einem bewölkten Himmel, dazu kommen, dass der Energiespeicher des Kraftfahrzeugs nicht mehr ausreichend von den Solarzellen vor einer erneuten Benutzung aufgeladen wird. Entsprechend kann es sinnvoll sein, dem Energiespeicher des Kraftfahrzeugs elektrische Energie von einer externen Energiequelle zuführen zu können. Ein ähnliches Energiemanagementsystem für ein Elektrofahrzeug ist in den Patentanmeldungen WO2014/199207 A1 (Toyota) und GB2499446 A (R. Hodgson) offenbart.

Aufgabe der vorliegenden Erfindung ist es, ein Energieverwaltungssystem für ein Kraftfahrzeug zu schaffen, mittels welchem das Kraftfahrzeug besonders gut die Energie von externen Energieerzeugern steuern, nutzen und besonders gut die eigene, erzeugte elektrische Energie anderen, externen Verbrauchern zur Verfügung stellen kann. Weiterhin kann es Aufgabe der vorliegenden Erfindung sein, ein Energieverwaltungssystem für ein Kraftfahrzeug zu schaffen, mittels welchem sich das Kraftfahrzeug besonders gut in eine Energieversorgungsinfrastruktur einbinden lässt.

Diese Aufgaben werden erfindungsgemäß durch den Gegenstand des unabhängigen Patentanspruchs gelöst. Vorteilhafte Ausgestaltungen mit zweckmäßigen Weiterbildungen der Erfindung sind in den jeweiligen Unteransprüchen angegeben.

Die Erfindung betrifft ein Energieverwaltungssystem für ein Kraftfahrzeug, wobei das Kraftfahrzeug wenigstens einen Energiespeicher und wenigstens eine Solarzelle zur Erzeugung einer elektrischen Energie aufweisen kann. Vorzugsweise umfasst das Energieverwaltungssystem eine Ladevorrichtung, welche dazu ausgebildet ist, sowohl den Energiespeicher von einer externen Energiequelle mit elektrischer Energie zu laden als auch einen externen Verbraucher von dem Energiespeicher und/oder von der Solarzelle mit elektrischer Energie zu versorgen. Diese kann auch als bidirektionaler Lader bezeichnet werden. Der Energiespeicher und die Solarzelle können dabei dazu ausgebildet sein, dass der Energiespeicher von der Solarzelle mit elektrischer Energie geladen werden kann. Weiterhin umfasst das Energieverwaltungssystem eine Steuervorrichtung nach Anspruch 1. Bei der direkten Energieabgabe von der Solarzelle kann insbesondere leicht verhindert werden, dass es zu einer unzulässig starken Entladung des Energiespeichers kommt. Bei einer Abgabe von elektrischer Energie von dem Energiespeicher kann besonders einfach ein weitestgehend konstanter Energiefluss gewährleistet werden. Der Energiespeicher kann beispielsweise als Batterie ausgebildet sein, insbesondere als Lithium-Ionen-Batterie. Das Versorgen eines externen Verbrauchers mit elektrischer Energie kann dabei auch als Laden eines externen Verbrauchers bezeichnet werden, insbesondere wenn dieser auch einen Energiespeicher umfasst.

Der externe Verbraucher und/oder die Ladevorrichtung können dazu ausgebildet sein, elektrische Energie von dem Energiespeicher und/oder von der Solarzelle zu beziehen. Bei der externen Energiequelle kann es sich beispielsweise um eine Ladesäule für Elektrofahrzeuge handeln. Es kann sich bei der externen Energiequelle auch beispielsweise um ein weiteres Kraftfahrzeug handeln, welches mit einem Energieverwaltungssystem, insbesondere dem geschilderten Energieverwaltungssystem, ausgerüstet ist. Die Solarzelle kann Teil des Kraftfahrzeugs sein, insbesondere kann die Solarzelle fest in oder an dem Kraftfahrzeug integriert sein. Die Ladevorrichtung kann ebenfalls Teil des Kraftfahrzeugs sein, insbesondere kann die Ladevorrichtung fest in oder an dem Kraftfahrzeug integriert sein. In diesem Fall ist das Energieverwaltungssystem besonders autark und steht einem Benutzer des Kraftfahrzeugs jederzeit zur Verfügung. Alternativ können die Solarzelle und/oder die Ladevorrichtung auch als externes Module ausgebildet sein, welche(s) mit dem Kraftfahrzeug verbunden werden können. In diesem Fall kann ein Kraftfahrzeug besonders einfach mit dem Energieverwaltungssystem nachgerüstet werden und ein einzelnes Energieverwaltungssystem unabhängig von einem bestimmten Kraftfahrzeugtyp bei unterschiedlichen Fahrzeugen genutzt werden. Das Kraftfahrzeug kann Teil des Energieverwaltungssystems sein.

Der Gleichspannungswandler und/oder der Wechselrichter und/oder der Gleichrichter können fahrzeugextern ausgebildet sein. Die Ladevorrichtung selbst kann als fahrzeugexterne Ladevorrichtung, insbesondere als fest installierte Ladevorrichtung, ausgebildet sein. Eine fest installierte Ladevorrichtung kann beispielsweise als sogenannte Wallbox in einer Garage oder an einer Gebäudewand oder an einer andersgearteten Vorrichtung ausgebildet sein. Die fahrzeugexterne Ladevorrichtung kann beispielsweise aber auch tragbar ausgebildet sein und/oder lösbar montiert, insbesondere mit jeweiligen Standardanschlüssen zur Verbindung mit einem Stromnetz. Es kann beispielsweise der Wechselrichter und/oder der Gleichrichter fahrzeugextern ausgebildet sein (z.B. als Teil einer Wallbox) während der Gleichspannungswandler fahrzeugintern ausgebildet ist.

Die Ladevorrichtung selbst kann auch modular aufgebaut sein, wobei Modulteile der Ladevorrichtung vorzugsweise installiert und wieder deinstalliert werden können, um die Fähigkeiten der Ladevorrichtung bedarfsgerecht anzupassen. Dazu können beispielsweise standardisierte Anschlüsse und/oder Aufnahmeräume vorgesehen sein, insbesondere am Kraftfahrzeug und/oder an einem Ladevorrichtungsgehäuse. Das Ladevorrichtungsgehäuse kann dabei fest mit dem Kraftfahrzeug verbunden sein. Einzelne Modulteile können dabei am Kraftfahrzeug installiert werden oder auch extern, z.B. in einer Ladesäule. Einzelne Modulteile können von verschiedenen Ladevorrichtungen des Systems wechselseitig genutzt bzw. daran installiert werden, womit das System besonders kostengünstig und flexibel ist. Zudem kann das Kraftfahrzeug so besonders leicht sein, da ein (derzeit) nicht benötigtes Modulteil nicht installiert sein muss. Auch eine Wartung und/oder ein Auswechseln jeweiliger Modulteile, insbesondere zum Ersetzen durch ein weiterentwickeltes Modulteil, ist so leicht möglich. Jeweilige Modulteile können insbesondere tragbar ausgebildet sein, jeweilige Standardanschlüsse aufweisen, insbesondere für Stromübertragungsleitungen und/oder Steuerleitungen, jeweilige Schnellverbinder zum Fixieren am Kraftfahrzeug und/oder zum Installieren an der Ladevorrichtung des Kraftfahrzeugs und/oder ein Gehäuse aufweisen, insbesondere ein im Wesentlichen wasserdichtes Gehäuse. Es kann z.B. der Gleichspannungswandler, der Wechselrichter und/oder der Gleichrichter jeweils als ein separates Modulteil ausgebildet sein. Es können auch Gleichspannungswandler und Wechselrichter, Wechselrichter und Gleichrichter oder Gleichspannungswandler und Gleichrichter jeweils als ein gemeinsames Modulteil ausgebildet sein und das jeweils andere Bauteil separat.

Das Kraftfahrzeug und/oder die Ladevorrichtung kann mit einer externen Energiequelle und/oder mit einem externen Verbraucher mittels einer Steckerverbindung, wie beispielsweise einem Schukostecker und/oder einem Typ-2-Stecker und/oder einem CCS, verbunden werden. Dabei kann das Kraftfahrzeug und/oder die Ladevorrichtung diese Steckerverbindung umfassen. Alternativ können jeweilige elektrische Verbindungen auch unabhängig von anderen Komponenten sein. Das Energieverwaltungssystem kann jeweilige elektrische Verbindungen, insbesondere auch Stecker und/oder Steckdosen, zum Verbinden externer Energiequellen und/oder externer Verbraucher mit der Ladevorrichtung umfassen. Die elektrische Verbindung kann dabei auch Teil eines konventionellen, landgebundenen Stromnetzes sein. Ein jeweiliger Stecker und/oder eine jeweilige Steckdose kann auch fest in oder an dem Kraftfahrzeug integriert sein.

Die Ladevorrichtung kann zudem eine Steuerung umfassen, mittels welcher beispielsweise ein Füllstand des Energiespeichers, eine elektrische Energieerzeugung der Solarzelle, jeweilige anliegende Spannungen und/oder eine Energieerzeugung überwacht und/oder gesteuert werden können. Die Steuerung kann dabei auch dazu ausgebildet sein, ein Schutz vor zu hohen Ladeströmen, Spannungen und/oder zu starken und/oder zu tiefen Entladungen und/oder zu starken und/oder zu hohen Aufladungen des Energiespeichers zu verhindern. Die Steuerung kann also auch als Schutzvorrichtung ausgebildet sein. Die Steuerung kann als ein Modulteil der Ladevorrichtung ausgebildet sein.

Vorzugsweise umfasst die Ladevorrichtung einen Gleichspannungswandler, mittels welchem sowohl eine Spannung eines von der externen Energiequelle dem Energiespeicher zuzuführenden Gleichstroms umwandelbar ist als auch mittels welchem eine Spannung eines von dem Energiespeicher und/oder der Solarzelle dem externen Verbraucher zuzuführenden Gleichstroms umwandelbar ist. Dieser Gleichspannungswandler kann ein bidirektionaler DC-DC-Wandler sein. Mittels dieses Gleichspannungswandlers kann das Kraftfahrzeug von einer externen Energiequelle geladen werden, ohne dass diese externe Energiequelle einen Gleichstrom mit einer Spannung zur Verfügung stellt, welcher der gewünschten Spannung der internen Energieversorgung des Kraftfahrzeugs entspricht. Im Falle einer Aufladung des Kraftfahrzeugs ermöglicht es der Gleichspannungswandler also, Gleichstromquellen zur Aufladung zu nutzen, die sich nicht an eine Energiespeicherspannung angleichen können. Damit ist es beispielsweise möglich, das Kraftfahrzeug direkt an eine fest installierte Solaranlage anzuschließen, da diese üblicherweise bereits einen Gleichstromoutput zur Verfügung stellt, welcher allerdings nicht zwangsweise einer gewünschten Ladespannung für das Kraftfahrzeug entspricht. Ebenso ist es möglich, das Kraftfahrzeug direkt an eine fest installierte Batterie, die einen Gleichstromoutput zur Verfügung stellt, anzuschließen. Der Gleichspannungswandler kann als ein Modulteil der Ladevorrichtung ausgebildet sein.

Damit kann die ansonsten verlustbehaftete Umwandlung von einem Gleichstrom in einen Wechselstrom (beispielsweise von einem Solarinverter) bei einer fest installierten Solaranlage und eine anschließende Umwandlung von Wechselstrom in einen Gleichstrom am Kraftfahrzeug (beispielsweise von einem Fahrzeugladegerät) vermieden werden. Dadurch kann beispielsweise eine Photovoltaikanlage auf einem Hausdach zur Aufladung des Kraftfahrzeugs besonders einfach und kostengünstig sein. Das Energieverwaltungssystem kann dabei eine solche, fest installierte Solaranlage umfassen.

Der Gleichspannungswandler ermöglicht dabei nicht nur eine Umwandlung einer Eingangsspannung, sondern auch eine Umwandlung einer Ausgangsspannung, zum Beispiel auf eine größere oder kleinere Spannung. Bei der Zuführung des Gleichstroms zu einem externen Verbraucher kann durch den Gleichspannungswandler also ebenfalls die Spannung an die benötigte Spannung des externen Verbrauchers angepasst werden. Damit ist es beispielsweise möglich, ein anderes Elektrofahrzeug zu laden, das eine andere Ladespannung benötigt, als diejenige, die das Kraftfahrzeug als Spenderfahrzeug unmittelbar an einer Energieerzeugungseinrichtung (insbesondere mit der Solarzelle) und/oder an dem Energiespeicher zur Verfügung stellen kann. Der durch das Kraftfahrzeug erzeugte elektrische Strom kann somit sowohl zur Ladung einer externen Batterie (beispielsweise eines ortsfesten Heimspeichers) als auch für externe Verbraucher mit Gleichstrominput genutzt werden.

Vorzugsweise umfasst die Ladevorrichtung einen Wechselrichter und/oder einen Gleichrichter, mittels welchen sowohl ein von der externen Energiequelle dem Energiespeicher zuzuführender Wechselstrom in einen Gleichstrom umwandelbar sein kann als auch mittels welchen ein von dem Energiespeicher und/oder der Solarzelle dem externen Verbraucher zuzuführender Gleichstrom von einem Gleichstrom in einen Wechselstrom umrichtbar sein kann. Dies kann auch als bidirektionaler AC-DC-Wandler bezeichnet werden. Der bidirektionale AC-DC-Wandler und/oder der Gleichrichter können als ein Modulteil der Ladevorrichtung ausgebildet sein. Der von dem Energiespeicher und/oder der Solarzelle zur Verfügung gestellte Gleichstrom kann also dem externen Verbraucher unter vorheriger Umwandlung von Gleichstrom in Wechselstrom als Wechselstrom zugeführt werden. Der Gleichrichter kann dabei dazu ausgebildet sein, den von der externen Energiequelle zur Verfügung gestellten Wechselstrom in einen für die Ladung des Energiespeichers benötigten Gleichstrom umzuwandeln. Der Wechselrichter kann dazu ausgebildet sein, einen von der Solarzelle und/oder dem Energiespeicher zur Verfügung gestellten Gleichstrom in einen für eine Stromversorgung des externen Verbrauchers benötigten Wechselstrom umzurichten. Der Wechselrichter kann insbesondere dazu ausgebildet sein, Gleichstrom in einphasigen und/oder mehrphasigen, insbesondere dreiphasigen, Wechselstrom umzurichten.

Der Wechselrichter kann als ein Modulteil der Ladevorrichtung ausgebildet sein. Dadurch kann beispielsweise nur bei Bedarf der Wechselrichter am Kraftfahrzeug vorgesehen sein. Insbesondere können sich so auch mehrere Nutzer bzw. Kraftfahrzeuge einen Wechselrichter bedarfsgerecht teilen. Beispielsweise kann der Wechselrichter bei zwei Fahrzeugen jeweils wechselseitig eingebaut werden, je nachdem, welches der zwei Fahrzeuge gerade als Energiespender fungiert. Dadurch kann ein solches System besonders kostengünstig sein und das entsprechende Fahrzeug ist - solange der Wechselrichter nicht benötigt und deswegen nicht angebracht ist - besonders leicht.

Der Wechselrichter ist dabei vorzugsweise dazu ausgebildet, eine Ausgangsspannung, eine Stromstärke und/oder Leistung bereitzustellen, welche wesentlich über der herkömmlichen Ausgangsspannung, Stromstärke und/oder Leistung eines herkömmlichen Bordnetzes eines Kraftfahrzeugs liegt. Das herkömmliche Bordnetz bezieht sich dabei beispielsweise auf das Stromnetz des Kraftfahrzeugs, mit dem üblicherweise kleinere elektrische Verbraucher im Fahrzeug versorgt werden können. Ein Beispiel für einen elektrischen Ausgang dieses Netzes ist ein elektrischer Zigarettenanzünder, an welchem beispielsweise eine Leselampe angeschlossen werden kann. Ein weiteres Beispiel ist ein USB-Anschluss im Kraftfahrzeug. Ebenso kann der Wechselrichter auch dazu ausgebildet sein, eine Ausgangsspannung, eine Stromstärke und/oder Leistung bereitzustellen, welche wesentlich über der herkömmlichen Ausgangsspannung und/oder Stromstärke eines Stromnetzes des Kraftfahrzeugs liegt, welches die kraftfahrzeugeigenen Verbraucher versorgt, wie beispielsweise Scheinwerfer, elektrische Steuerungen, Komfortsystem und/oder elektrische Verdichter versorgt. Ein Beispiel für ein solches herkömmliches Bord- oder Stromnetz ist ein internes 12V oder 48V Bordnetz.

Vorzugsweise ist der Wechselrichter dazu ausgebildet, Wechselstrom mit einer Spannung von mindestens 100 V und/oder einer Stromstärke von mindestens 4,5 A bereitzustellen, insbesondere bei einer Leistung von mindestens 0,8 kW. Besonders bevorzugt kann Wechselstrom mit einer Spannung von ca. 110 bis 120 V oder 200 V bis 240 V bei mindestens 10 A, bevorzugt mindestens 14 A Stromstärke bereitgestellt werden. Hierbei wird vorzugsweise eine Leistung von mindestens 2,5, stärker bevorzugt mindestens 3 oder 3,5 kW erreicht. So kann z.B. eine Spannung von ca. 220 V bei 16,5 A Stromstärke und 3,7 kW Leistung bereitgestellt werden. Damit kann beispielsweise eine unmittelbare Einspeisung in das US-Stromnetz oder EU-Stromnetz möglich sein. Ebenso ist eine Versorgung von elektrischen Verbrauchern mit großem Leistungsbedarf möglich, welche nach den vorgenannten Standards operieren, ohne dass eine weitere Transformation notwendig ist. Zudem können so auch andere Elektrofahrzeuge direkt geladen werden, zumindest mit geringer Geschwindigkeit. Die oben beschriebenen herkömmlichen Bordnetze können dagegen üblicherweise lediglich 2 A Stromstärke sowie 440 W Leistung bei 220 V Wechselstrom bereitstellen.

Der Gleichrichter und/oder der Wechselrichter können im Kraftfahrzeug fest verbaut sein und somit ermöglichen, fahrzeugintern eine Eingangswechselspannung auf eine Gleichspannung gleichzurichten und/oder die an der Solarzelle und/oder dem Energiespeicher zur Verfügung stehende Gleichspannung in eine Ausgangswechselspannung wechselzurichten. Im Falle einer Aufladung des Kraftfahrzeugs kann dieses somit einfach an verschiedene Wechselstromspannungsquellen angeschlossen werden, welche sowohl ein- als auch dreiphasig sein können. Im Falle einer Energiezufuhr zu einem externen Verbraucher kann so beispielsweise auch ein anderes Kraftfahrzeug geladen werden, welches lediglich mit einer Wechselspannung aufgeladen werden kann. Zudem kann so auch elektrische Energie zurück in ein Stromnetz gespeist werden. Außerdem kann das Kraftfahrzeug so als eine Insellösung für die Zurverfügungstellung von elektrischem Strom für externe Verbraucher genutzt werden. Beispielsweise kann das Kraftfahrzeug so dazu genutzt werden, verschiedene elektrische Geräte bei einem Campingurlaub unabhängig von einem zur Verfügung stehenden fest installierten Stromnetz zu betreiben.

Wenn die Ladevorrichtung sowohl den Gleichspannungswandler als auch den Wechselrichter und den Gleichrichter umfasst, kann das Kraftfahrzeug also problemlos in unterschiedliche elektrische Energieversorgungsnetze eingebunden werden. Das Kraftfahrzeug kann mit dem Energieverwaltungssystem sowohl andere Kraftfahrzeuge laden, als auch von diesen selber aufgeladen werden. Das Kraftfahrzeug kann als Insellösung unabhängig von einem Landstromnetz elektrischen Geräten Energie zur Verfügung stellen, sowohl mit Gleichspannung als auch Wechselspannung, gemäß deren Anforderungen. Der Energiespeicher kann so auch problemlos bei verschiedenen Stromnetzen als Speicherpuffer für Überkapazitäten bei der Stromherstellung genutzt werden. Umgekehrt kann überschüssige, von dem Kraftfahrzeug erzeugte elektrische Energie zurück in ein Stromnetz eingespeist werden, um so elektrische Energie der Allgemeinheit zur Verfügung stellen zu können. Dabei kann die Einspeisung in ein Stromnetz, die Aufladung bzw. Energieversorgung externer Verbraucher und/oder das zur Verfügung stellen eines Speicherpuffers für ein Stromnetz auch vergütet werden, so dass mit dem Energieverwaltungssystem und dem Kraftfahrzeug mit der wenigstens einen Solarzelle auch Einnahmen für deren Besitzer generiert werden können.

Vorzugsweise sind der Gleichspannungswandler und/oder der Wechselrichter und/oder der Gleichrichter durch ein gemeinsames Stromrichterbauteil gebildet. Durch wenigstens die Kombination zweier dieser Bauteile in einem gemeinsamen Stromrichterbauteil kann das Energieverwaltungssystem besonders kompakt und kostengünstig sein. Falls die Ladevorrichtung nicht fest an dem Kraftfahrzeug installiert ist, kann diese so zudem besonders einfach zu transportieren sein. Insgesamt kann die Funktionalität des Gleichspannungswandlers und/oder des Wechselrichters und/oder des Gleichrichters in einem einzelnen Stromrichterbauteil integriert und zur Verfügung gestellt sein.

Auch das Stromrichterbauteil kann als Modulteil der Ladevorrichtung ausgebildet sein. Das Stromrichterbauteil selbst kann auch modular aufgebaut sein, wobei der Gleichspannungswandler, der Wechselrichter und/oder der Gleichrichter dann als jeweilige Modulteile des Stromrichterbauteils ausgebildet sein können. Die Modulteile des Stromrichterbauteils können analog zu den Modulteilen der Ladevorrichtung ausgebildet sein. Das Stromrichterbauteil in modularer Bauweise kann analog zu der Ladevorrichtung in modularer Bauweise ausgebildet sein.

Vorzugsweise sind der Gleichspannungswandler und/oder der Wechselrichter und/oder der Gleichrichter fest im Kraftfahrzeug integriert. Insbesondere können diese einzelnen Komponenten als gemeinsames Stromrichterbauteil fest in oder am Kraftfahrzeug befestigt beziehungsweise verbaut sein. Das Kraftfahrzeug kann so besonders autark und einfach in verschiedene elektrische Netze eingebunden sein, welche auch als Stromnetze bezeichnet werden. Als elektrisches Netz beziehungsweise Stromnetz kann dabei bereits die Verbindung aus einer Energiequelle und einem Verbraucher betrachtet werden. Dabei kann es sich dann um ein sogenanntes Inselnetz handeln, welches beispielsweise unabhängig von einer nationalen Stromversorgung sein kann. Der Gleichspannungswandler und/oder der Wechselrichter und/oder der Gleichrichter können zum Beispiel intern an einer Karosserie verbaut sein, insbesondere als fest verbautes gemeinsames Stromrichterbauteil.

Alternativ können der Gleichspannungswandler und/oder der Wechselrichter und/oder der Gleichrichter auch als ein oder mehrere von dem Kraftfahrzeug separate Bauteile ausgebildet sein. Beispielsweise können der Gleichspannungswandler und/oder der Wechselrichter und/oder der Gleichrichter als von dem Kraftfahrzeug unabhängiges Stromrichtermodul ausgebildet sein. Dieses Stromrichtermodul kann dann beispielsweise leicht an unterschiedlichen Kraftfahrzeugen nachgerüstet werden und/oder an unterschiedlichen Kraftfahrzeugen verwendet werden. Insbesondere kann dieses Stromrichtermodul dabei dazu ausgebildet sein, an der Ladevorrichtung des Kraftfahrzeugs angeschlossen zu werden, welche an dem Kraftfahrzeug fest verbaut ist.

Vorzugsweise ist die Ladevorrichtung dazu ausgebildet, nur so viel elektrische Energie abzugeben, dass ein Ladezustand des Energiespeichers nicht unter einen einstellbaren Minimalladezustand fällt und/oder die Ladevorrichtung dazu ausgebildet ist, Energie nur während eines einstellbaren Ladezeitraums und/oder für eine einstellbare Ladezeitdauer abzugeben. Dadurch kann sichergestellt werden, dass für einen Benutzer des Kraftfahrzeugs jederzeit ausreichend Energie zu dessen gewünschten Benutzung zur Verfügung steht. Alternativ oder zusätzlich kann die Ladevorrichtung dazu ausgebildet sein, nur diejenige (und/oder nur so viel) elektrische Energie abzugeben, die durch die Solarzelle erzeugt wird.

Beispielsweise kann bei Erreichen des Minimalladezustands nur noch so viel Energie an externe Verbraucher abgegeben werden, wie jeweils derzeit von der Solarzelle erzeugt wird. Dazu kann dann beispielsweise der Energiespeicher überbrückt werden und nur noch Energie direkt von der Solarzelle an den externen Verbraucher abgegeben werden. Dabei kann insbesondere eine stabile Regelung vorgesehen sein, welche gewisse Toleranzen aufweist, um ein ständiges Wechseln der jeweiligen Quelle von Energie zu vermeiden. Beispielsweise kann ein Grenzladezustand vorgesehen werden, welcher größer als der Minimalladezustand ist und bei welchem wieder Energie von dem Energiespeicher entnommen und an externe Verbraucher abgegeben wird. Beispielsweise kann erneut Energie von dem Energiespeicher an externe Verbraucher abgegeben werden, sobald der derzeitige Ladezustand des Energiespeichers 2%, 5% oder 10% größer als der Minimalladezustand ist.

Der Minimalladezustand kann beispielsweise von dem Benutzer des Kraftfahrzeugs vorgegeben werden, beispielsweise mittels eines Infotainmentsystems des Kraftfahrzeugs und/oder einer App eines Smartphones. Der Minimalladezustand kann aber auch alternativ oder zusätzlich in Abhängigkeit von einer geplanten Route aus dem Navigationssystem automatisch berechnet werden. Beispielsweise kann der Benutzer des Kraftfahrzeugs vorgeben, dass er jeden Morgen zu einem bestimmten Arbeitsplatz fährt und hierfür ausreichend Energie zur Verfügung stehen soll, wobei der dafür notwendige Minimalladezustand automatisch berechnet und eingestellt wird.

Auch durch das Einstellen eines Ladezeitraums und/oder einer Ladezeitdauer kann eine ausreichende Energierestmenge für die Benutzung des Kraftfahrzeugs sichergestellt werden. Darüber hinaus können solche Vorgaben auch der Sicherheit dienen. Beispielsweise kann somit verhindert werden, dass während der Nacht häufig Personen mit externen Verbrauchern das Kraftfahrzeug zum Laden nutzen und dabei gegebenenfalls aufgrund der eingeschränkten Sichtverhältnisse das Kraftfahrzeug zerkratzen und/oder Anwohner durch Lärm belästigen. Durch eine Ladezeitdauer kann auch verhindert werden, dass ein einzelner Nutzer eines externen Verbrauchers andere Nutzer anderer externer Verbraucher von der Nutzung des Kraftfahrzeugs als Energiequelle ausschließt. Der einstellbare Ladezeitraum kann insbesondere ein einstellbarer Maximalladezeitraum und/oder eine Ladeuhrzeit sein. Die einstellbare Ladezeitdauer kann beispielsweise eine maximale Ladezeitdauer sein, insbesondere eine maximale Ladezeitdauer pro externem Verbraucher und/oder externem Benutzer. Vorzugsweise umfasst das Energieverwaltungssystem eine Steuerungsvorrichtung, mittels welcher eine Energieversorgung des externen Verbrauchers durch die Ladevorrichtung freigebbar ist und/oder mittels welcher der Minimalladezustand, der Ladezeitraum und/oder die Ladezeitdauer einstellbar ist. Damit kann die Ladevorrichtung gemäß den Wünschen des Besitzers des Kraftfahrzeugs konfiguriert werden. Die Steuerungsvorrichtung kann dabei Teil der Ladevorrichtung sein und/oder fest in oder am Kraftfahrzeug integriert sein. Damit kann der Nutzer des Energieverwaltungssystems, insbesondere der Besitzer des Kraftfahrzeugs, einstellen, wann, wo und/oder wie viel Energie von dem Kraftfahrzeug externen Verbrauchern zur Verfügung gestellt werden soll. Die Energieversorgung des externen Verbrauchers kann auch als Laden des externen Verbrauchers bezeichnet werden und deren Freigabe als Freigabe des Ladens des externen Verbrauchers. Die Steuerungsvorrichtung kann optional am Kraftfahrzeug vorgesehen und/oder in dieses eingebaut sein. Die Steuerungsvorrichtung kann auch als Modulteil der Ladevorrichtung ausgebildet sein.

Alternativ oder zusätzlich kann auch ein einstellbarer Ladeort mittels der Steuerungsvorrichtung vorgegeben sein, welcher von dem Besitzer des Energieverwaltungssystems und/oder Kraftfahrzeugs einstellbar ist. Dann kann die Ladevorrichtung beispielsweise nur an bestimmten Orten externen Verbrauchern Strom zur Verfügung stellen, beispielsweise vor dem Zuhause des Besitzers. Dazu können die Ladevorrichtung und/oder die Steuerungsvorrichtung mit einem Navigationssystem des Kraftfahrzeugs verbunden sein.

Die Freigabe kann dabei auch als zweistufige Freigabe gestaltet sein. In einer ersten Stufe kann ein Besitzer des Kraftfahrzeugs ein Laden erlauben und in einer zweiten Stufe bucht und/oder aktiviert ein Benutzer eines externen Verbrauchers die Energieversorgung bzw. das Laden dieses externen Verbrauchers. Erst nach erfolgter zweistufiger Freigabe wird dann tatsächlich der externe Verbraucher mit elektrischem Strom versorgt. Die Erlaubnis zum Versorgen eines externen Verbrauchers mit elektrischer Energie kann dabei in einer Onlinekarte angezeigt werden, welche von dem Energieverwaltungssystem und/oder mehreren miteinander verbundenen Energieverwaltungssystemen zur Verfügung gestellt wird. Damit kann jeweiligen Nutzern von externen Energieverbrauchern angezeigt werden, wo derzeit von Kraftfahrzeugen für externe Verbraucher Energie zur Verfügung gestellt werden kann. Dabei kann auch die zur Verfügung stehende Ladung bzw. zur Verfügung stehende Menge elektrischer Energie für die Versorgung eines externen Verbrauchers angezeigt werden, beispielsweise in Abhängigkeit von einem derzeitigen Ladezustand des Energiespeichers des Kraftfahrzeugs und/oder einer derzeitigen Energieerzeugung der Solarzelle und/oder dem eingestellten Minimalladezustand für den Energiespeicher.

Nach der Erfindung entriegelt die Steuerungsvorrichtung in Abhängigkeit von der Freigabe der Energieversorgung des externen Verbrauchers ein Abdeckelement für eine elektrische Verbindung der Ladevorrichtung mit dem externen Verbraucher, insbesondere eines Steckers und/oder einer Steckdose. Alternativ oder zusätzlich kann bei einer nicht erfolgten Freigabe das Abdeckelement von der Steuerungsvorrichtung verriegelt werden. Beispielsweise kann ein Deckel einer Steckdose automatisch bei einem Anfordern und/oder einem Buchen eines Ladens eines externen Verbrauchers aufspringen. Alternativ kann das Abdeckelement bereits automatisch bei dem Erteilen der Erlaubnis zum Versorgen eines externen Verbrauchers bei der zweistufigen Freigabe aufspringen. Dadurch können vorbeigehende Nutzer mit externen Verbrauchern unmittelbar an dem geöffneten Abdeckelement erkennen, dass dort Energie für externe Verbraucher zur Verfügung steht, ohne dass dafür beispielswiese auf die Onlinekarte zurückgegriffen werden muss.

Nach der Erfindung ist die Steuerungsvorrichtung dazu ausgebildet, sich mit wenigstens einem Steuerungsgerät, wie insbesondere einem Smartphone und/oder einer Fernsteuerung, zu verbinden, mittels welchem ein Freigabebefehl zur Freigabe des Ladens des externen Verbrauchers an die Steuerungsvorrichtung übermittelbar ist. Alternativ oder zusätzlich kann die Steuerungsvorrichtung ein Lesegerät umfassen, insbesondere ein Kartenlesegerät und/oder ein biometrisches Lesegerät, mittels welchem in Abhängigkeit von einem Lesevorgang die Energieversorgung des externen Verbrauchers freigebbar ist. Damit kann das Energieverwaltungssystem, beispielsweise durch eine entsprechende App eines Smartphones, sowohl von dem Besitzer des Kraftfahrzeugs als auch von jeweiligen Nutzern externer Verbraucher gesteuert werden. Die Steuerungsvorrichtung kann dafür einen Funkempfänger umfassen. Die Übermittlung eines jeweiligen Freigabebefehls kann beispielsweise mittels Bluetooth, Funk nach WLAN-Standard, Near Field Communication, GSM, 4G und/oder LTE erfolgen, ebenso wie durch ein proprietäres Funknetz, beispielsweise für die Fernsteuerung. Das Kartenlesegerät kann beispielsweise ein RFID-Lesegerät umfassen. Das Kartenlesegerät kann auch alternativ oder zusätzlich als EC-Karten- und/oder Kreditkartenleser ausgebildet sein. Dann kann unmittelbar bei der Autorisierung der Energieversorgung des externen Verbrauchers auch eine Abbuchung bzw. Bezahlung des genutzten Stroms erfolgen. Das Steuerungsgerät ist bevorzugt extern von der Ladevorrichtung ausgebildet und mit der Steuerungsvorrichtung über Funk verbunden. Das Steuerungsgerät kann auch zum Einstellen weiterer Parameter, wie beispielsweise des Minimalladezustands, des Ladezeitraums, der Ladezeitdauer, des Ladeorts und/oder eines Preises für den zur Verfügung gestellten Strom, genutzt werden. Die Steuerungsvorrichtung kann dabei auch mit einem zentralen Steuercomputer und/oder einer Datenbank vernetzt sein und/oder durch diese gebildet sein.

Die geschilderte Ausgestaltungsform lässt sich auch bei dem geschilderten zweistufigen Freigabeverfahren nutzen. Beispielsweise kann mittels des Smartphones des Besitzers des Kraftfahrzeugs die Stromversorgung externer Verbraucher erlaubt werden. Anschließend kann ein Nutzer des elektrischen Stroms die Stromversorgung durch sein eigenes Smartphone oder eine Chipkarte, welche anschließend auch eine automatische Abbuchung des Preises erlaubt, aktivieren. Erst dann erfolgt die tatsächliche Energieversorgung des externen Verbrauchers.

Vorzugsweise umfasst das Energieverwaltungssystem eine Abrechnungsvorrichtung, mittels welcher die an den externen Verbraucher übertragene Energie in Abhängigkeit von einem einstellbaren Preis abrechenbar ist. Diese Abrechnungsvorrichtung kann Teil der Ladevorrichtung und/oder der Steuerungsvorrichtung sein, die Abrechnungsvorrichtung kann aber auch Teil eines von dem Kraftfahrzeug externen zentralen Steuercomputers sein. Abrechnen kann insbesondere ein Abbuchen und/oder eine Rechnungsübermittlung umfassen. Mittels des Kartenlesegeräts kann auch unmittelbar eine Abbuchung von einer EC-Karte und/oder einer Kreditkarte durch die Abrechnungsvorrichtung erfolgen. Der Preis kann beispielsweise mittels des Steuerungsgeräts eingestellt werden. Vorzugsweise wird der Preis dabei bei Freigabe des externen Ladens eingestellt, insbesondere bei der Erlaubnis des externen Ladens. Der Preis kann aber auch automatisch von einer Strombörse vorgegeben werden, mittels welcher die Abrechnungsvorrichtung verbunden ist. Dazu kann die gleiche Schnittstelle wie für das Steuerungsgerät genutzt werden, wie beispielsweise eine Internetverbindung. Auch die Abrechnungsvorrichtung kann als Modulteil der Ladevorrichtung ausgebildet sein.

Die Abrechnungsvorrichtung stellt also eine Abrechnungsfunktion zur Verfügung. Der Preis kann beispielsweise pro Kilowattstunde und/oder pro genutztem Ladezeitraum eingestellt sein. Der Preis kann dabei auch in Abhängigkeit des aktuellen Strompreises eines fest installierten Landstromnetzes eingestellt sein und/oder in Abhängigkeit von dem Ladezeitpunkt, der Ladezeitdauer, dem Ladeort und/oder der in dem Energiespeicher zur Verfügung stehenden elektrischen Energie und/oder der derzeit von der Solarzelle erzeugten elektrischen Energie einstellbar sein.

Mittels der Abrechnungsvorrichtung kann alternativ oder zusätzlich auch ein in ein Stromnetz eingespeister elektrischer Strom abgerechnet werden, insbesondere in ein nationales Stromnetz. Umgekehrt kann die Abrechnungsvorrichtung alternativ oder zusätzlich dazu ausgebildet sein, ein Aufladen des Energiespeichers des Kraftfahrzeugs zu bezahlen. Auch hier können jeweilige Parameter eines Preises durch den Besitzer des Kraftfahrzeugs analog zu dem Preis für die Energieversorgung eines externen Verbrauchers einstellbar sein. Beispielsweise kann der Energiespeicher des Kraftfahrzeugs erst geladen werden, wenn der Preis unter einen vorgegebenen Maximalpreis gefallen ist. Dadurch kann sichergestellt werden, dass der Energiespeicher des Kraftfahrzeugs mit besonders günstigem Strom geladen wird, beispielsweise nachts. Auch dafür kann direkt eine Uhrzeit und/oder eine Zeitdauer vorgegeben werden. Alle diese Einstellungen können beispielsweise durch eine entsprechende Software auf einem Smartphone vorgenommen und an die Ladevorrichtung beziehungsweise die Steuerungsvorrichtung übertragen werden, beispielsweise über Funk und/oder über das Internet.

Vorzugsweise ist die Steuerungsvorrichtung dazu ausgebildet, nach Abstellen des Kraftfahrzeugs eine Anfrage bezüglich der Freigabe und/oder eines einzustellenden Minimalladezustands und/oder eines einzustellenden Preises an das wenigstens eine Steuerungsgerät zu übermitteln. Auch weitere der oben genannten einstellbaren Parameter können dabei abgefragt werden. Dadurch kann das Energieverwaltungssystem besonders komfortabel konfiguriert werden, wenn das Kraftfahrzeug nicht mehr zum Fahren genutzt wird. Insbesondere kann so verhindert werden, dass der Besitzer des Kraftfahrzeugs eine Freigabe zum Laden externer Verbraucher und/oder Verbinden mit anderen Stromnetzteilen vergisst. Umgekehrt kann es auch vorgesehen sein, dass die Freigabe immer vorgesehen ist und von dem Besitzer lediglich ein Verbot erforderlich ist und/oder angefordert wird. Das Abstellen kann beispielsweise durch ein Abschließen des Kraftfahrzeugs und/oder ein Ausschalten des Antriebs erkannt werden. Alternativ oder zusätzlich kann beispielsweise auch eine Triangulation des Autoschlüssels und/oder eines dem Besitzer und/oder Fahrer des Kraftfahrzeugs zugeordneten Smartphones erfolgen. Beispielsweise kann das Smartphone mittels GPS und/oder des Internets seine derzeitige Position übermitteln und bei Überschreiten eines Maximalabstands zu dem Kraftfahrzeug die Anfrage gestellt werden. Die Position des Autoschlüssels kann zu diesem Zweck beispielsweise relativ zum Kraftfahrzeug mit einem NFC-System ermittelt werden.

Ein weiterer Aspekt der Erfindung betrifft ein Netzwerk mit wenigstens zwei der erfindungsgemäßen Energieverwaltungssysteme, wobei die Energieverwaltungssysteme jeweils alle der vorgenannten Merkmale in unterschiedlichen Kombinationen aufweisen können. Die wenigstens zwei Energieverwaltungssysteme müssen also nicht identisch sein, da der Gleichspannungswandler, der Wechselrichter und der Gleichrichter eine Kompatibilität sicherstellen können. Die zwei erfindungsgemäßen Energieverwaltungssysteme, die das Netzwerk bilden, können insbesondere an zwei unterschiedlichen Kraftfahrzeugen vorgesehen sein.

Vorzugsweise sind die zwei Energieverwaltungssysteme dabei elektrisch miteinander verbunden, wobei wenigstens ein erstes der zwei Energieverwaltungssysteme wenigstens zeitweise als externer Verbraucher für das andere Energieverwaltungssystem fungiert und wenigstens ein anderes der zwei Energieverwaltungssysteme wenigstens zeitweise als Energiequelle für das erste Energieverwaltungssystem fungiert. So kann ein Netzwerk aus Energieverwaltungssystemen gebildet werden, wobei auch ein landgebundenes fest installiertes Stromnetz als Stromübertragungssystem genutzt werden kann. Dabei kann sowohl das Stromnetz als auch die Energieverwaltungssysteme, insbesondere jeweilige Energiespeicher der Kraftfahrzeuge, als Strompuffer genutzt werden. Dabei können gegebenenfalls anfallende Netzentgelte beispielsweise auch über die Abrechnungsvorrichtung beglichen werden. Die mindestens zwei Energieverwaltungssysteme, insbesondere die zwei Kraftfahrzeuge, können direkt miteinander verbunden werden, z. B. über eine Leitung die direkt das erste Kraftfahrzeug mit dem zweiten Kraftfahrzeug verbindet. Die Energie muss daher nicht über ein zwischengeschaltetes Stromnetz (etwa ein nationales Stromnetz) übertragen werden.

Eine Mehrzahl von Energieverwaltungssystemen können auch ein Netzwerk bilden, welches auch unabhängig von einer nationalen Stromversorgung sein kann. Die jeweiligen Energieverwaltungssysteme können dabei wechselseitig ihre Funktion ändern. Beispielsweise kann während einer gewissen Zeitdauer ein erstes Kraftfahrzeug ein zweites und ein drittes Kraftfahrzeug laden, während einer anschließenden zweiten Zeitdauer das zweite und das dritte Kraftfahrzeug das erste Kraftfahrzeug laden und während einer weiteren sich daran anschließenden dritten Zeitdauer das erste und das zweite Kraftfahrzeug das dritte Kraftfahrzeug laden. Bei einer großen Anzahl von Energieverwaltungssystemen können diese auch weitestgehend unabhängig voneinander agieren. Zwischenzeitlich können jeweilige Kraftfahrzeuge auch an dem Netzwerk angeschlossen sein, ohne dass sie selber elektrische Energie erhalten oder anderen externen Verbrauchern elektrische Energie zuführen. Ein solches Kraftfahrzeug ist also für eine gewisse Zeitdauer in dem Netzwerk passiv. Ebenso kann auch das nationale Stromnetz zwischenzeitlich als Verbraucher und/oder Energieversorger in diesem Netzwerk fungieren. Eine jeweilige Regelung kann dabei automatisch erfolgen, insbesondere durch einen zentralen Steuercomputer des Energieverwaltungssystems. Dieser zentrale Steuercomputer kann dabei auch Teil einer Steuerung des nationalen Stromsystems sein.

Die Erfindung bezieht sich ebenso auf mit dem beschriebenen Energieverwaltungssystem und dem beschriebenen Netzwerk in Verbindung stehende Verfahren, z. B. ein Verfahren zur Steuerung des Energieverwaltungssystems und/oder des Netzwerks gemäß dieser Anmeldung. Bei einem solchen Verfahren können insbesondere mehrere verschiedene Nutzer über separate Steuerungsgeräte (z. B. separate Smartphones) an der Steuerung eines erfindungsgemäßen Energieverwaltungssystems beteiligt sein, insbesondere an der Steuerung eines erfindungsgemäßen Energieverwaltungssystems, dass an einem Kraftfahrzeug vorgesehenen ist.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in der Figur alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

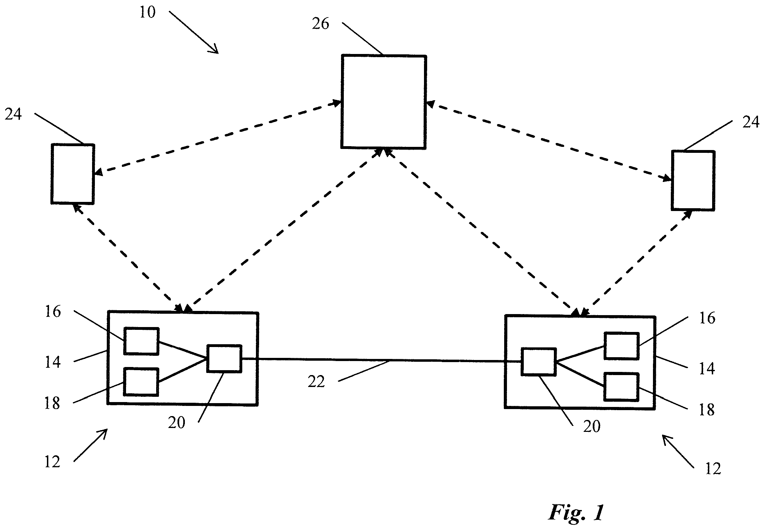

Fig. 1 zeigt schematisch ein Netzwerk mit wenigstens zwei Energieverwaltungssystemen.

Fig. 1 zeigt schematisch ein Netzwerk 10 mit wenigstens zwei Energieverwaltungssystemen 12. Weiterhin sind zwei Kraftfahrzeuge 14 gezeigt, welche jeweils einen Energiespeicher 16 und eine Solarzelle 18 aufweisen. Die Solarzelle 18 kann dabei elektrische Energie erzeugen, welche in dem Energiespeicher 16 gespeichert werden kann. Weiterhin weist jedes Kraftfahrzeug 14 eine Ladevorrichtung 20 auf, welche jeweils mit der Solarzelle 18 und dem Energiespeicher 16 des zugeordneten Kraftfahrzeugs 14 elektrisch verbunden ist. Die Ladevorrichtung 20 umfasst dabei ein Stromrichterbauteil, in welchem die Funktionalität eines Gleichspannungswandlers, eines Wechselrichters und eines Gleichrichters integriert ist. Die beiden Ladevorrichtungen 20 der beiden Kraftfahrzeuge 14 sind dabei mittels einer elektrischen Verbindung 22 elektrisch miteinander verbunden, beispielsweise mittels eines Stromkabels. Dafür können die jeweiligen Ladevorrichtungen 20 einen Stecker aufweisen. Im vorliegenden Fall umfasst jedes der Energieverwaltungssysteme 12 dabei jeweils eines der beiden Kraftfahrzeuge 14, wobei die elektrische Verbindung 22 beiden Energieverwaltungssystemen 12 zugeordnet werden kann. Die Kraftfahrzeuge 14 können durch die elektrische Verbindung 22 unmittelbar (d.h. ohne ein zwischengeschaltetes Stromnetz) miteinander verbunden sein, gegebenenfalls auch ohne weitere Spannungswandlungsvorrichtungen, die nicht fester Bestandteil der Kraftfahrzeuge 14 sind.

Aufgrund des so gebildeten elektrischen Netzwerkes ist es nun möglich, dass sich die beiden Kraftfahrzeuge 14 gegenseitig mit Strom versorgen. Beispielsweise kann Energie von der Solarzelle 18 eines der beiden Kraftfahrzeuge 14 sowohl dem Energiespeicher 16 des einen Kraftfahrzeugs 14 als auch des anderen Kraftfahrzeugs 14 zugeführt werden. Dies ist beispielsweise sinnvoll, wenn eines der beiden Kraftfahrzeuge 14 im Schatten steht und nicht selber ausreichend elektrische Energie mit seiner Solarzelle 18 erzeugen kann während das andere Kraftfahrzeug 14 so starker Sonneneinstrahlung ausgesetzt ist, dass es mehr elektrische Energie mittels seiner Solarzelle 18 erzeugt als zur Ladung des eigenen Energiespeichers 16 notwendig ist.

In diesem Fall fungiert das Kraftfahrzeug 14, welches Energie abgibt, als externe Energiequelle für das andere Kraftfahrzeug 14, während das andere Kraftfahrzeug 14 für das die Energie abgebende Kraftfahrzeug 14 als externer Verbraucher fungiert.

Die Ladevorrichtung 20 ermöglicht es dabei, sowohl eine Spannung eines von der externen Energiequelle dem Energiespeicher 16 zuzuführenden Gleichstroms umzuwandeln als auch einen von einer jeweiligen Solarzelle 18 erzeugten und/oder von einem jeweiligen Energiespeicher 16 zur Verfügung gestellten Gleichstrom dem externen Verbraucher als Wechselstrom zuzuführen.

Dadurch können sich die beiden Kraftfahrzeuge 14 beispielsweise jeweils wechselseitig mit elektrischer Energie versorgen, ohne dass die beiden Bordspannungen und/oder jeweils abgegebenen und in dem Energiespeicher 16 aufnehmbaren Stromarten identisch sein müssen. Dadurch können insbesondere unterschiedliche Kraftfahrzeuge und/oder auch unterschiedliche Energieverwaltungssysteme miteinander zu einem Netzwerk 10 verbunden werden. Die Energieverwaltungssysteme 12 können so besonders leicht in bestehende Netzwerke integriert werden.

Weiterhin kann die jeweilige Ladevorrichtung 20 aufgrund der zur Verfügung gestellten Wechselrichter- und Gleichrichterfunktion sowohl ein von der externen Energiequelle dem Energiespeicher 16 zuzuführenden Wechselstrom in einen Gleichstrom umwandeln als auch einen von dem Energiespeicher 16 und/oder der Solarzelle 18 dem externen Verbraucher zuzuführenden Strom von einem Gleichstrom des Bordnetzes in einen Wechselstrom umrichten. Das Bordnetz kann dabei beispielsweise als ein oben beschriebenes, herkömmliches Bordnetz, insbesondere mit 12 V oder 48 V ausgebildet sein. Bevorzugt handelt es sich jedoch um das Bordnetz zur Stromversorgung eines elektrischen Antriebs des Kraftfahrzeugs und/oder um einer Hochvolt-Bordnetz (z.B. mit mindestens 200 V, vorzugsweise mit mindestens 350 V). Die Umrichtung in Wechselstrom kann dabei unmittelbar von diesem Hochvolt-Bordnetz und/oder dem Bordnetz zur Stromversorgung des elektrischen Antriebs des Kraftfahrzeugs erfolgen. Alternativ kann auch beispielsweise erst vom Hochvolt-Bordnetz auf das herkömmliche Bordnetz umgespannt werden und von diesem Netz umgerichtet werden. Dafür kann das herkömmliche Bordnetz zur Bereitstellung hoher Stromstärken ausgebildet sein, also als Teil eines integralen Bordnetzes sowohl zur Versorgung von Verbrauchern (etwa von Verbrauchern, die mit 12 V oder 48 V versorgt werden, wie z.B. der Innenbeleuchtung) als auch des Antriebs. Dafür können relevante Teile des Netzes für Stromstärken von über 5 A, insbesondere über 15 A, bevorzugt 16,5 A oder mehr, ausgebildet sein. Das Bordnetz der jeweiligen Kraftfahrzeuge 14 operiert also mit einem Gleichstrom, welcher beispielsweise eine im Wesentlichen konstante Spannung aufweist. Durch den integrierten Wechselrichter und den integrierten Gleichrichter kann der jeweilige Energiespeicher 16 dennoch mit einem extern zur Verfügung gestellten Wechselstrom geladen werden bzw. einem externen Verbraucher kann von dem Kraftfahrzeug 14 von der Solarzelle 18 und/oder dem Energiespeicher 16 ein Wechselstrom zur Verfügung gestellt werden, obwohl das jeweilige Kraftfahrzeug 14 intern mit Gleichstrom operiert. Auch dies erleichtert die Einbindung der jeweiligen Kraftfahrzeuge 14 in ein bestehendes Stromnetz.

Weiterhin ist in der Fig. 1 jeweils ein jedem Kraftfahrzeug 14 zugeordnetes Smartphone 24 gezeigt, welches jeweils als Teil des Energieverwaltungssystems 12 betrachtet werden kann. Mittels der jeweiligen Smartphones 24 kann die Ladevorrichtung 20 des zugeordneten Kraftfahrzeugs 14 gesteuert werden. Beispielsweise kann damit ein Zurverfügungstellen von Strom für externe Verbraucher freigeschaltet werden. Dabei kann auch ein Preis für diesen Strom festgelegt werden und eine maximale Abgabe einer Strommenge und/oder ein Minimalladezustand, welchen der jeweilige Energiespeicher 16 nicht unterschreiten soll.

Dabei kann das jeweilige Smartphone 24 dazu konfiguriert sein, den Besitzer der jeweiligen Kraftfahrzeuge 14 automatisch an eine solche Freigabe bei Verlassen des Kraftfahrzeugs 14 zu erinnern. Alternativ kann die Abgabe von elektrischer Energie immer freigeschaltet sein und der Besitzer des Smartphones 24 diese Freigabe widerrufen und die Stromabgabe damit sperren.

Bei einer Freigabe der Energieversorgung eines externen Verbrauchers kann dabei ein Abdeckelement eines Steckers für die elektrische Verbindung 22 in dem zugeordneten Kraftfahrzeug 14 automatisch aufspringen. Dadurch ist direkt von außerhalb des Kraftfahrzeugs 14 zu erkennen, dass dieses als Stromquelle genutzt werden kann. An dem Kraftfahrzeug 14 kann dabei ein standardisierter Stecker eines jeweiligen Landes vorgesehen sein, wie beispielsweise ein Schukostecker. Dabei kann auch vorgesehen sein, dass der Stecker in seiner Form änderbar ist, beispielsweise nach Art eines internationalen Steckeradapters. Damit kann ein einheitlicher Stecker auch in unterschiedlichen Ländern genutzt werden und/oder mit unterschiedlichen Ladegeräten genutzt werden.

Mittels des Smartphones 24 kann auch eine Gebühr für den abgegebenen Strom eingestellt werden. Diese Gebühr kann beispielsweise automatisch von einem externen Verbraucher beziehungsweise von dem Besitzer des externen Verbrauchers erhoben werden.

Zur Verbindung der Ladevorrichtung 20 mit dem Smartphone 24 kann diese einen Funkempfänger aufweisen, wie beispielsweise einen Funkempfänger für ein mobiles Datennetz. Alternativ oder zusätzlich kann die Ladevorrichtung 20 auch eine Bluetooth-Schnittstelle nutzen und/oder ein Wireless LAN des Kraftfahrzeugs 14.

Zudem ist in Fig. 1 ein zentraler Steuercomputer 26 gezeigt, welcher jeweils mit den Smartphones 24 und den Ladevorrichtungen 20 in Funkverbindung steht, beispielsweise ebenfalls über das mobile Internet. Auf diesem zentralen Steuercomputer 26 können jeweilige Freigaben, Stromverbrauchsabgaben, Gebühren, Standorte der Kraftfahrzeuge 14 und/oder relevante Informationen und/oder Einstellungen verwaltet werden. Beispielsweise kann an den zentralen Steuercomputer 26 übermittelt werden, dass das Kraftfahrzeug 14 als Stromquelle für externe Verbraucher freigegeben wurde. Dafür kann der zentrale Steuercomputer 26 eine Datenbank aufweisen. Diese Freigabe, optional mit einem von dem Besitzer eingestellten Preis für den Strom, kann dabei an alle Nutzer einer jeweiligen Verwaltungssoftware übertragen werden, welche beispielsweise auch auf dem Smartphone 24 laufen kann und integriert zu einer Steuersoftware für die Ladevorrichtung 20 sein kann. So kann beispielsweise auf jedem Smartphone 24 auf einer zugeordneten Karte angezeigt werden, welche Kraftfahrzeuge 14 wo als externe Stromquelle freigeschaltet wurden und zu welchem Preis dort wie viel Strom verfügbar ist.

Auf dem zentralen Steuercomputer 26 können dabei auch jeweilige Strompreise automatisch generiert und/oder geregelt werden. So kann beispielsweise bei vielen zur Verfügung stehenden Stromquellen bzw. freigeschalteten Ladevorrichtungen 20 automatisch ein geringerer Strompreis eingestellt werden als bei nur einer geringen Anzahl von örtlichen verfügbaren freigeschalteten Ladevorrichtungen 20 und/oder nur bei einer geringen Stromerzeugung, beispielsweise bei schlechtem Wetter. Der Strompreis kann also beispielsweise in Abhängigkeit von der derzeitig zur Verfügung stehenden Energiemenge für externe Verbraucher, der Anzahl der Ladestellen und/oder einer derzeitigen gesamten Energieerzeugung im Netzwerk 10 automatisch eingestellt werden.

Der zentrale Steuercomputer 26 kann dabei sowohl als Teil jedes Energieverwaltungssystems 12 angesehen werden, aber auch als davon separates Teil des Netzwerks 10. Das Netzwerk 14 kann auch eine Vielzahl von unterschiedlichen Kraftfahrzeugen und/oder Energieverwaltungssystemen umfassen.

### Bezugszeichenliste

- 10: Netzwerk
- 12: Energieverwaltungssystem
- 14: Kraftfahrzeug
- 16: Energiespeicher
- 18: Solarzelle
- 20: Ladevorrichtung
- 22: elektrische Verbindung
- 24: Smartphone
- 26: zentraler Steuercomputer

## Patentansprüche

1. Energieverwaltungssystem (12) für ein Kraftfahrzeug (14), wobei das Kraftfahrzeug (14) wenigstens einen Energiespeicher (16) und wenigstens eine Solarzelle (18) zur Erzeugung einer elektrischen Energie aufweist, wobei das Energieverwaltungssystem (12) eine Ladevorrichtung (20) aufweist, welche dazu ausgebildet ist sowohl den Energiespeicher (16) von einer externen Energiequelle mit elektrischer Energie zu laden als auch einen externen Verbraucher von dem Energiespeicher (16) und/oder von der Solarzelle (18) mit elektrischer Energie zu versorgen, wobei
die Ladevorrichtung (20) einen Gleichspannungswandler umfasst, mittels welchem sowohl eine Spannung eines von der externen Energiequelle dem Energiespeicher (16) zuzuführenden Gleichstroms umwandelbar ist als auch mittels welchem eine Spannung eines von dem Energiespeicher (16) und/oder der Solarzelle (18) dem externen Verbraucher zuzuführenden Gleichstroms umwandelbar ist, und wobei
die Ladevorrichtung (20) einen Wechselrichter und einen Gleichrichter umfasst, mittels welchen sowohl ein von der externen Energiequelle dem Energiespeicher (16) zuzuführender Wechselstrom in einen Gleichstrom umwandelbar ist als auch mittels welchen ein von dem Energiespeicher (16) und/oder der Solarzelle (18) dem externen Verbraucher zuzuführender Gleichstrom von einem Gleichstrom in einen Wechselstrom umwandelbar ist, **dadurch gekennzeichnet dass** das Energieverwaltungssystem (12) eine Steuerungsvorrichtung umfasst, mittels welcher eine Energieversorgung des externen Verbrauchers durch die Ladevorrichtung (20) freigebar ist und
die Steuerungsvorrichtung dazu ausgebildet ist, sich mit wenigstens einem als Smartphone (24) ausgebildeten Steuerungsgerät zu verbinden, mittels welchem ein Freigabebefehl zur Freigabe des Ladens des externen Verbrauchers an die Steuerungsvorrichtung übermittelbar ist,
wobei die Steuerungsvorrichtung in Abhängigkeit von der Freigabe der Energieversorgung des externen Verbrauchers ein Abdeckelement für eine elektrische Verbindung (22) der Ladevorrichtung mit dem externen Verbraucher, insbesondere eines Steckers und/oder einer Steckdose, entriegelt.

2. Energieverwaltungssystem (12) nach Anspruch 1, wobei
der Gleichspannungswandler und/oder der Wechselrichter und/oder der Gleichrichter durch ein gemeinsames Stromrichterbauteil gebildet sind.

3. Energieverwaltungssystem (12) nach einem der Ansprüche 1 oder 2, wobei
der Gleichspannungswandler und/oder der Wechselrichter und/oder der Gleichrichter fest im Kraftfahrzeug (14) integriert sind.

4. Energieverwaltungssystem (12) nach einem der Ansprüche 1 oder 2, wobei
der Gleichspannungswandler und/oder der Wechselrichter und/oder der Gleichrichter fahrzeugextern ausgebildet sind.

5. Energieverwaltungssystem (12) nach einem der vorhergehenden Ansprüche, wobei
die Ladevorrichtung modular aufgebaut ist und der der Gleichspannungswandler und/oder der Wechselrichter und/oder der Gleichrichter als vom Fahrzeughalter zusammenstellbare Modulteile der Ladevorrichtung ausgebildet sind.

6. Energieverwaltungssystem (12) nach einem der vorhergehenden Ansprüche, wobei
die Ladevorrichtung (20) dazu ausgebildet ist, nur so viel elektrische Energie abzugeben, dass ein Ladezustand des Energiespeichers (16) nicht unter einen einstellbaren Minimalladezustand fällt und/oder
die Ladevorrichtung (20) dazu ausgebildet ist, Energie nur während eines einstellbaren Ladezeitraums und/oder für eine einstellbare Ladezeitdauer abzugeben.

7. Energieverwaltungssystem (12) nach einem der vorhergehenden Ansprüche, wobei
mittels der Steuerungsvorrichtung der Minimalladezustand, der Ladezeitraum und/oder die Ladezeitdauer einstellbar ist.

8. Energieverwaltungssystem (12) nach einem der vorhergehenden Ansprüche, wobei
es sich bei der externen Energiequelle um ein weiteres Kraftfahrzeug handelt, welches mit einem Energieverwaltungssystem ausgerüstet ist und/oder der externe Verbraucher als weiteres Kraftfahrzeug ausgebildet ist.

9. Energieverwaltungssystem (12) nach einem der vorhergehenden Ansprüche, wobei
die Steuerungsvorrichtung ein Lesegerät umfasst, insbesondere ein Kartenlesegerät und/oder ein biometrisches Lesegerät, mittels welchem in Abhängigkeit von einem Lesevorgang die Energieversorgung des externen Verbrauchers freiggebbar ist.

10. Energieverwaltungssystem (12) nach einem der vorhergehenden Ansprüche, wobei
das Energieverwaltungssystem (12) eine Abrechnungsvorrichtung umfasst, mittels welcher in Abhängigkeit von einem einstellbaren Preis für die an den externen Verbraucher übertragene Energie eine Preissumme berechnet wird, wobei eine Information bezüglich der übertragenen Energiemenge, der Preis und/oder die Preissumme vorzugsweise an das Smartphone (24) als Steuerungsgerät übermittelt wird.

11. Energieverwaltungssystem (12) nach einem der vorhergehenden Ansprüche, wobei
die Steuerungsvorrichtung dazu ausgebildet ist, nach Abstellen des Kraftfahrzeugs (14) eine Anfrage bezüglich der Freigabe und/oder eines einzustellenden Minimalladezustands und/oder eines einzustellenden Preises an das wenigstens eine Steuerungsgerät zu übermitteln.

12. Netzwerk (10) mit wenigstens zwei Energieverwaltungssystemen (12) nach einem der vorhergehenden Ansprüche, welche elektrisch miteinander verbunden sind, wobei wenigstens ein erstes der zwei Energieverwaltungssysteme (12) wenigstens zeitweise als externer Verbraucher für das andere Energieverwaltungssystem (12) fungiert und wenigstens ein anderes der zwei Energieverwaltungssysteme (12) wenigstens zeitweise als Energiequelle für das erste Energieverwaltungssystem (12) fungiert.

## Claims

1. Energy management system (12) for a motor vehicle (14), the motor vehicle (14) comprising at least one energy storage device (16) and at least one solar cell (18) for generating an electrical energy, said energy management system (12) being provided with a charging device (20) designed both to charge the energy storage device (16) with electrical energy from an external energy source and to supply an external consumer with electrical energy from the energy storage device (16) and/or from the solar cell (18), wherein
the charging device (20) comprises a d.c.-d.c. converter by means of which a voltage of a direct current to be supplied to the energy storage device (16) from the external energy source is convertible and also by means of which a voltage of a direct current to be supplied to the external consumer from the energy storage device (16) and/or the solar cell (18) is convertible, and wherein
the charging device (20) comprises an inverter and a rectifier, by means of which an alternating current to be supplied to the energy storage device (16) from the external energy source is convertible into a direct current, and also by means of which a direct current to be supplied to the external consumer from the energy storage device (16) and/or the solar cell (18) is convertible from a direct current into an alternating current,
**characterised in that** the energy management system (12) comprises a control apparatus by means of which an energy supply of the external consumer can be enabled by the charging device (20), and
the control apparatus is designed to connect to at least one control device provided as a smartphone (24), by means of which an enable command to enable the charging of the external consumer can be transmitted to the control apparatus,
wherein depending on the enabling of the energy supply to the external consumer the control apparatus unlocks a cover element for an electrical connection (22) of the charging device to the external consumer, in particular a plug and/or a socket.

2. Energy management system (12) according to claim 1, wherein
the d.c.-d.c. converter and/or the inverter and/or the rectifier are provided by means of a common power converter component.

3. Energy management system (12) according to any one of claims 1 or 2, wherein
the d.c.-d.c. converter and/or the inverter and/or the rectifier are permanently integrated into the motor vehicle (14) .

4. Energy management system (12) according to any one of claims 1 or 2, wherein
the d.c.-d.c. converter and/or the inverter and/or the rectifier are provided external to the motor vehicle.

5. Energy management system (12) according to any one of the preceding claims, wherein
the charging device is modular in construction and the d.c.-d.c. converter and/or the inverter and/or the rectifier is/are provided as modular components of the charging device which can be assembled by the holder of the motor vehicle.

6. Energy management system (12) according to any one of the preceding claims, wherein
the charging device (20) is provided to deliver only as much electrical energy for a charging state of the energy storage device (16) not to fall below an adjustable minimum charging state and/or the charging device (20) is provided only to deliver energy during an adjustable charging period and/or for an adjustable charging duration.

7. Energy management system (12) according to any one of the preceding claims, wherein
the minimum charging state, the charging period and/or the charging duration are adjustable by means of the control apparatus.

8. Energy management system (12) according to any one of the preceding claims, wherein
the external energy source is an additional motor vehicle equipped with an energy management system and/or the external consumer is an additional motor vehicle.

9. Energy management system (12) according to any one of the preceding claims, wherein
the control apparatus comprises a reader, in particular a card reader and/or a biometric reader, by means of which the energy supply of the external consumer can be enabled depending on a read process.

10. Energy management system (12) according to any one of the preceding claims, wherein
the energy management system (12) comprises an accounting device by means of which, depending on an adjustable price for the energy transmitted to the external consumer, a total price is calculated, wherein information regarding the transmitted quantity of energy, the price and/or the total price is transmitted preferably to the smartphone (24) as the control device.

11. Energy management system (12) according to any one of the preceding claims, wherein
the control apparatus is provided to, after switching off the motor vehicle (14), transmit to the at least one control device a query concerning the enabling and/or an adjustable minimum charging state and/or an adjustable price.

12. Network (10) with at least two energy management systems (12) according to any one of the preceding claims which are electrically interconnected, wherein
at least a first one of the two energy management systems (12) functions at least temporarily as an external consumer for the other energy management system (12) and at least one other of the two energy management systems (12) functions at least temporarily as an energy source for the first energy management system (12).

## Revendications

1. Système de gestion d'énergie (12) pour un véhicule à moteur (14), dans lequel le véhicule à moteur (14) comporte au moins un accumulateur d'énergie (16) et au moins une cellule solaire (18) permettant de produire une énergie électrique, dans lequel le système de gestion d'énergie (12) comporte un dispositif de charge (20), lequel est réalisé de façon à aussi bien charger l'accumulateur d'énergie (16) en énergie électrique depuis une source d'énergie externe qu'alimenter un récepteur externe en énergie électrique depuis l'accumulateur d'énergie (16) et/ou depuis la cellule solaire (18), dans lequel
le dispositif de charge (20) comprend un convertisseur de tension continue, au moyen duquel une tension d'un courant continu à conduire depuis la source d'énergie externe vers l'accumulateur d'énergie (16) peut être convertie aussi bien qu'une tension d'un courant continu à conduire depuis l'accumulateur d'énergie (16) et/ou la cellule solaire (18) vers le récepteur externe peut être convertie, et dans lequel le dispositif de charge (20) comprend un onduleur et un redresseur, au moyen desquels un courant alternatif à conduire depuis la source d'énergie externe vers l'accumulateur d'énergie (16) peut être converti en courant continu qu'un courant continu à conduire depuis l'accumulateur d'énergie (16) et/ou la cellule solaire (18) vers le récepteur externe peut être converti en courant alternatif,
**caractérisé en ce que** le système de gestion d'énergie (12) comprend un dispositif de commande, au moyen duquel une alimentation en énergie du récepteur externe par le dispositif de charge (20) peut être autorisée et le dispositif de commande est réalisé de façon à se raccorder à au moins un appareil de commande réalisé comme ordiphone (24), au moyen duquel un ordre d'autorisation peut être transmis au dispositif de commande pour autoriser la charge du récepteur externe,
dans lequel, en fonction de l'autorisation de l'alimentation en énergie du récepteur externe, le dispositif de commande déverrouille un élément de couverture pour un raccord électrique (22) du dispositif de charge au récepteur externe, en particulier une fiche et/ou une prise.

2. Système de gestion d'énergie (12) selon la revendication 1, dans lequel
le convertisseur de tension continue et/ou l'onduleur et/ou le redresseur sont formés par un composant rectificateur de courant commun.

3. Système de gestion d'énergie (1) selon l'une des revendications 1 ou 2, dans lequel
le convertisseur de tension continue et/ou l'onduleur et/ou le redresseur sont intégrés de manière fixe dans le véhicule à moteur (14).

4. Système de gestion d'énergie (1) selon l'une des revendications 1 ou 2, dans lequel
le convertisseur de tension continue et/ou l'onduleur et/ou le redresseur sont réalisés comme externes au véhicule.

5. Système de gestion d'énergie (12) selon l'une des revendications précédentes, dans lequel
le dispositif de charge est conçu de manière modulaire et le convertisseur de tension continue et/ou l'onduleur et/ou le redresseur sont réalisés comme parties modulaires du dispositif de charge pouvant être assemblées par le détenteur du véhicule.

6. Système de gestion d'énergie (12) selon l'une des revendications précédentes, dans lequel
le dispositif de charge (20) est réalisé de façon à ne délivrer d'énergie électrique que tant qu'un état de charge de l'accumulateur d'énergie (16) ne tombe pas en dessous d'un état de charge minimal et/ou le dispositif de charge (20) est réalisé de façon à ne délivrer d'énergie électrique que pendant une période de charge réglable et/ou pour une durée de charge réglable.

7. Système de gestion d'énergie (12) selon l'une des revendications précédentes, dans lequel
l'état de charge minimal, la période de charge et/ou la durée de charge est réglable par le biais du dispositif de commande.

8. Système de gestion d'énergie (12) selon l'une des revendications précédentes, dans lequel
on entend par source d'énergie externe un autre véhicule à moteur, lequel est équipé d'un système de gestion d'énergie et/ou le récepteur externe est réalisé comme autre véhicule à moteur.

9. Système de gestion d'énergie (12) selon l'une des revendications précédentes, dans lequel
le dispositif de commande comprend un appareil de lecture, en particulier un appareil lecteur de carte et/ou un appareil de lecture biométrique, au moyen duquel en fonction d'une opération de lecture l'alimentation en énergie du récepteur externe peut être autorisée.

10. Système de gestion d'énergie (12) selon l'une des revendications précédentes, dans lequel
le système de gestion d'énergie (12) comprend un dispositif de comptabilité, au moyen duquel un montant de prix est calculé en fonction d'un prix paramétrable pour l'énergie transmise au récepteur externe, dans lequel une information se rapportant à la quantité d'énergie transmise, au prix et/ou au montant de prix est de préférence transmise à l'ordiphone (24) en tant qu'appareil de commande.

11. Système de gestion d'énergie (12) selon l'une des revendications précédentes, dans lequel
le dispositif de commande est réalisé de façon à communiquer, après arrêt du véhicule à moteur (14), une requête en rapport avec l'autorisation et/ou avec un état de charge minimal à paramétrer et/ou un prix à paramétrer à l'au moins un appareil de commande.

12. Réseau (10) comportant au moins deux systèmes de gestion d'énergie (12) selon l'une des revendications précédentes, lesquels sont raccordés électriquement l'un à l'autre, dans lequel au moins un premier des deux systèmes de gestion d'énergie (12) fonctionne au moins temporairement comme récepteur externe pour l'autre système de gestion d'énergie (12) et au moins un autre des deux systèmes de gestion d'énergie (12) fonctionne au moins temporairement comme source d'énergie pour le premier système de gestion d'énergie (12).
